Europäisches Patentamt

European Patent Office

Office européen des brevets

(19)

(11) Numéro de publication : **0 331 955 B1**

(12) **FASCICULE DE BREVET EUROPEEN**

(45) Date de publication du fascicule du brevet :
06.05.92 Bulletin 92/19

(51) Int. Cl.⁵ : **B29D 30/34, B60C 9/02**

(21) Numéro de dépôt : **89102864.9**

(22) Date de dépôt : **20.02.89**

(54) **Eléments constitutifs d'un appareil de fabrication d'un renforcement pour pneumatiques.**

(30) Priorité : **07.03.88 FR 8803005**

(43) Date de publication de la demande :
**13.09.89 Bulletin 89/37**

(45) Mention de la délivrance du brevet :
**06.05.92 Bulletin 92/19**

(84) Etats contractants désignés :
**AT BE CH DE ES FR GB GR IT LI LU NL SE**

(56) Documents cités :
**EP-A- 0 243 851**
**DE-B- 1 291 112**
**US-A- 2 139 840**

(73) Titulaire : **COMPAGNIE GENERALE DES ETABLISSEMENTS MICHELIN-MICHELIN & CIE**
**4, rue du Terrail**
**F-63000 Clermont-Ferrand (FR)**

(72) Inventeur : **Laurent, Daniel**
**23, avenue de la Plaine Fleurie**
**F-38240 MEYLAN (FR)**
Inventeur : **Laurent, Jean-Luc**
**19, rue de la Garde Les Grosliers**
**F-63140 Chatel-Guyon (FR)**

(74) Mandataire : **Bauvir, Jacques et al**
**Michelin & Cie Service K. Brevets**
**F-63040 Clermont-Ferrand Cédex (FR)**

## Description

La présente invention concerne la fabrication des pneumatiques. Elle se rapporte au type d'appareil, suivant les préambules des revendications 1 et 11, d'écrit dans la demande de brevet EP 243 851.

Un tel appareil est destiné à la fabrication de renforcements pour pneumatiques à partir d'un seul fil. Parmi les organes essentiels, cet appareil comporte des moyens de retenue du fil, portés par des leviers désignés par le terme "bras de support" dans la demande de brevet EP 243 851. Cet appareil comporte aussi des moyens de présentation du fil aux moyens de retenue. Dans les exemples décrits, ces moyens de présentation sont constitués par un bras rotatif assurant le dévidage et l'accrochage de fil aux moyens de retenue ; les moyens de retenue du fil sont constitués par une paire de crochet et le dévidage du fil est assuré à partir d'un orifice situé à l'extrémité du bras rotatif.

Le but de la présente invention est de proposer d'autres moyens de retenue et d'autres moyens de présentation du fil, particulièrement adaptés (bien que ce ne soit pas limitatif) lorsqu'on emploie du fil assez raide, comme par exemple un câble métallique.

Selon l'invention, les moyens de retenue d'un fil continu pour un appareil de fabrication de pneumatiques, ledit appareil étant du type comportant deux couronnes coaxiales de leviers dont l'extrémité porte lesdits moyens de retenue, sont caractérisés en ce que lesdits moyens définissent essentiellement une gorge limitée par deux lèvres, le fond de ladite gorge décrivant une courbe non fermée.

Pour la connaissance du principe de fabrication mis en oeuvre dans la présente invention, ainsi que pour le configuration générale de l'appareil de fabrication, il convient de se reporter à la demande de brevet EP 243 851.

Les figures suivantes décrivent en détail les moyens spécifiques de la présente invention, à savoir :

la figure 1 montre un levier pourvu d'un moyen de retenue,

les figures 2 et 3 montrent en détails un moyen de retenue,

les figures 4 et 5 montrent le bras rotatif équipé des moyens de présentation,

les figures 6 à 9 montrent la présentation du fil aux moyens de retenue,

les figures 10 à 16 illustrent le rabattement du fil autour du noyau.

Dans la présente demande de brevet, le terme fil doit être compris dans le sens le plus général pour désigner le matériau de renforcement filiforme, mono-filament ou multi-filament, retors, câble... La présente invention, bien que d'application possible très large, est spécifiquement adaptée à l'utilisation de fils comme les câblés métalliques de renforcement, c'est-à-dire de fils qui ne peuvent être soumis à un pliage de faible rayon sans subir une déformation permanente.

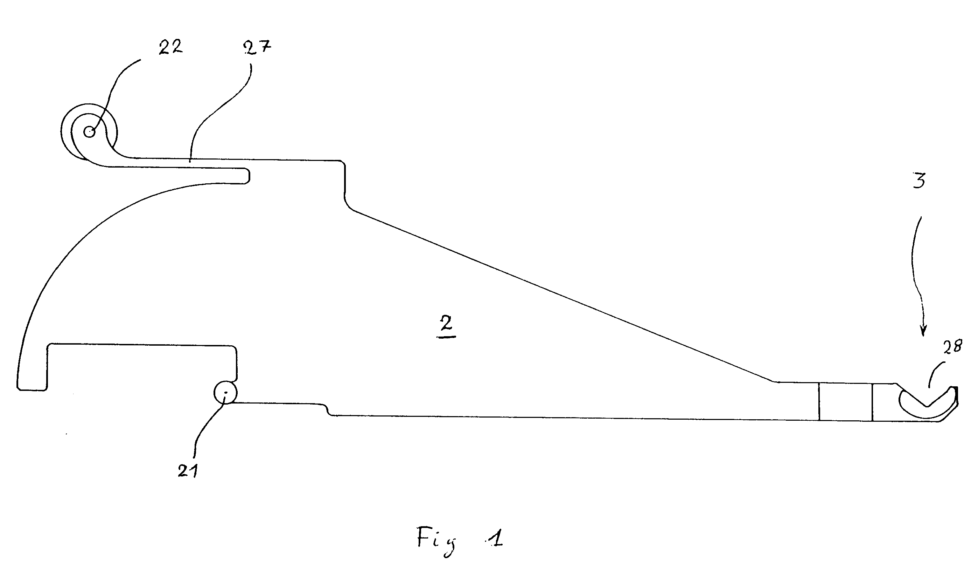

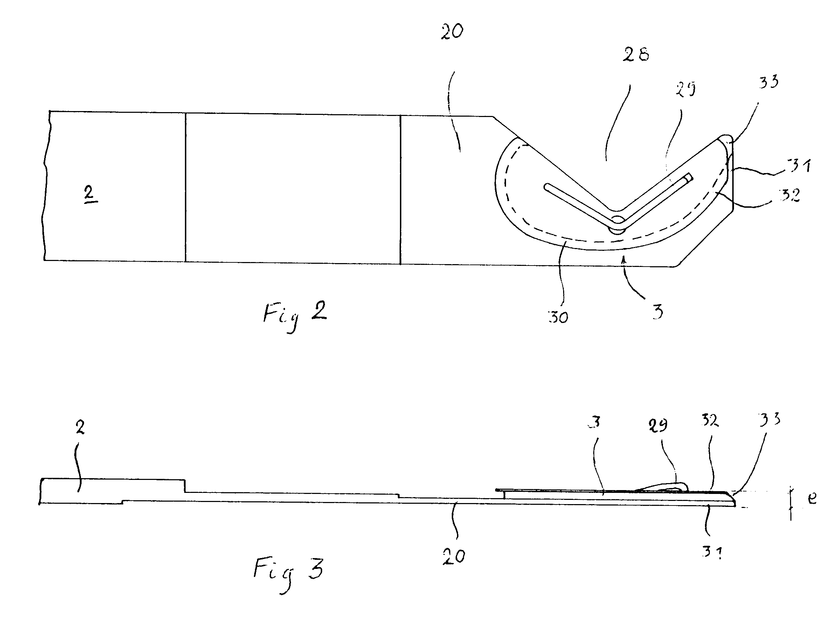

A la figure 1, on voit un levier 2 qui, comme enseigné par le brevet européen déjà cité, comporte un point d'articulation 21 et un point de commande 22. A son extrémité, il porte des moyens de retenue du fil. Il s'agit essentiellement d'une gorge 3 limitée par deux lèvres 31 et 32 (voir figures 2 et 3). Mais cela pourrait aussi bien être une pluralité de petits crochets ou ergots (au moins trois) disposés de manière à former, à définir une gorge limitée par deux lèvres qui, à condition de maîtriser la tension du fil, peuvent remplir une fonction équivalente. Ainsi, le fil 4 peut s'engager sur la gorge 3 comme il le ferait autour d'une poulie. Pour éviter les déformations permanentes préjudiciables, il suffit de maintenir le rayon de courbure de ladite gorge 3, dans le plan d'enroulement du fil 4, au dessus d'une valeur limite dépendant directement des caractéristiques du fil 4 utilisé.

Afin de garantir une bonne retenue du fil 4 par la gorge 3, celle-ci se développe avantageusement radialement. Si l'on fabrique un renforcement de carcasse radiale, les fils 4 du renforcement doivent être orientés sensiblement radialement. Pour pouvoir ancrer la carcasse, on enfile une tringle dans des boucles formées à cet effet. Afin que cet enfilage soit possible, cette boucle doit se disposer sensiblement radialement. Donc la gorge 3 qui assure la retenue du fil 4 et, comme le font les crochets dans la demande de brevet européen précitée, assure également la formation d'une boucle, est orientée sensiblement radialement (voir figure 10). Cette gorge 3 doit avoir, au moment de l'accrochage du fil 4 par le bras rotatif 5, une orientation adéquate, compte tenu du mouvement de rabattement autour du noyau tel qu'il est exposé dans la demande de brevet précitée.

Ainsi, le fond 30 de ladite gorge 3 définit une courbe plane non fermée, comprise dans un plan sensiblement radial. Cette courbe est non fermée parce qu'il est inutile qu'elle le soit. Même compte tenu du mouvement de rabattement, le fil 4 ne sera en appui sur la gorge 3 que sur un arc inférieur à 360° (Pour le mouvement de rabattement, voir figures 10 et suivantes).

La liaison mécanique entre la gorge 3 et le levier 2 correspondant est réalisée très simplement : le prolongement 20 à l'extrémité du levier 2 constitue l'une 31 des lèvres 31 et 32 de la gorge 3. Ce prolongement 20 est constituée par une tôle plane radiale, tout comme d'ailleurs le levier 2 lui-même.

Pour assurer l'ancrage du renforcement à une tringle, on utilise également les leviers 2, dont l'extrémité présente, à cette fin, un évidement 28 du côté radialement extérieur. Cet évidement 28 sert de gabarit pour l'installation d'une tringle. La courbe définie par le fond 30 de la gorge 3 a l'allure générale d'un ovale partiel, qui contourne l'évidement 28, de sorte que celui-ci se trouve à l'intérieur de la gorge 3. L'ancrage du renforcement sera exposé plus en détails lors de la description de la phase finale du fonctionnement de l'appareil.

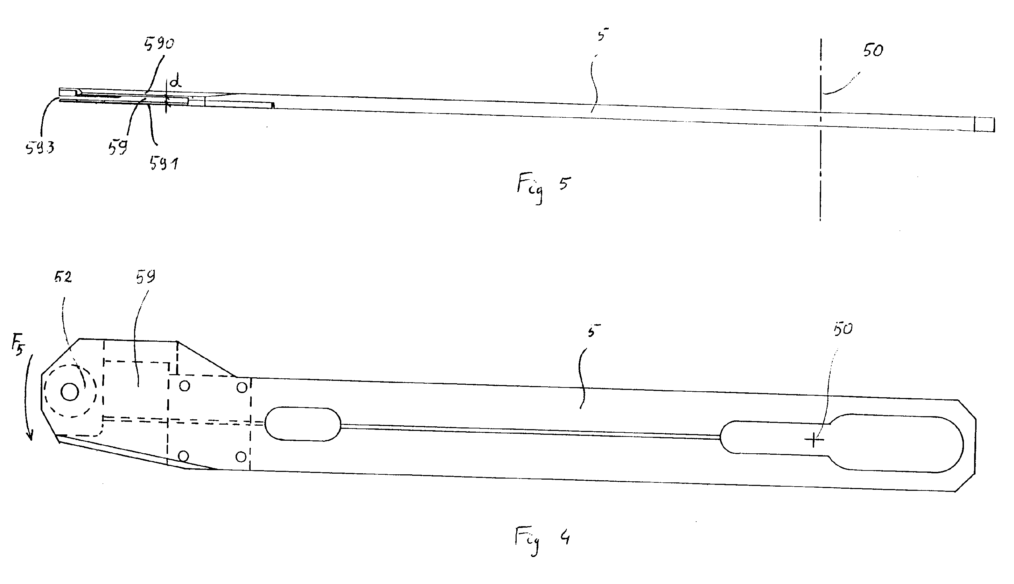

Un bras rotatif 5 (voir figure 4 : axe de rotation 50 et mouvement selon la flèche F5) assure le dévidage et l'accrochage du fil 4 aux gorges 3. Ce bras rotatif 5 porte à son extrémité des moyens de présentation dont on va maintenant décrire une exécution spécifiquement conçue pour être utilisée avec les moyens de retenue 3 précédemment décrits.

L'ensemble constitué par des moyens de retenue du fil et un moyen de présentation du fil pour un appareil de fabrication de pneumatique, ledit appareil étant du type comportant deux couronnes coaxiales de leviers dont l'extrémité porte des moyens de retenue tels que définis ci-dessus, est caractérisé en ce que les moyens de présentation ont l'allure d'une fourche constituée par deux éléments plans 590 et 591, parallèles au mouvement desdits moyens de présentation, séparés entre eux de l'épaisseur "e" des moyens de retenue 3, le fil 4 étant amené et dévidé par l'un des deux éléments plans.

Pour faciliter le dévidage du fil 4, ce bras rotatif 5 comporte encore une poulie de renvoi 52 située dans un plan perpendiculaire à l'axe de rotation 50 du bras rotatif 5, et donc dans le plan du mouvement des moyens de présentation. A l'intérieur de la fourche, entre les éléments plans 590 et 591, apparaît un passage 59 pour la gorge 3. Ce passage 59 est disposé entre la poulie de renvoi 52 et l'axe de rotation 50.

De manière analogue à ce qui a été dit à propos de la courbure de la gorge 3, le rayon de la poulie de renvoi 52 doit être suffisant pour ne pas imprimer au fil 4 des déformations permanentes. L'utilisation d'une poulie plutôt qu'une gorge ou un conduit courbé équivalent permet d'éviter une usure par frottement à un endroit où la pression de contact du fil 4 sur l'organe de dévidage est importante.

En sortie de dévidage, la rampe 53 amène le brin 41 du fil 4 hors du plan de rotation du brin 42 situé entre l'axe de rotation 50 et la poulie 52. Ce brin 41 est confiné entre les éléments plans 590, 591, ce qui permet l'accrochage à coup sûr la gorge 3.

Grâce à ce type de moyen de présentation en forme de fourche, la présentation du fil 4 à chaque gorge 3 est très précise. L'accrochage effectif est garanti par le faible jeu subsistant entre une gorge 3 et chaque élément plan 590 et 591 lorsqu'une gorge 3 se trouve entre ceux-ci. Ces éléments plans 590 et 591 sont séparés entre eux d'une distance d à peine supérieure à l'épaisseur "e" des moyens de retenue, à savoir dans la réalisation décrite, l'épaisseur cumulée de la gorge 3 et des lèvres 31 et 32 la limitant. Notons que l'ergot 29, dont le rôle apparaît plus loin, s'escamote dans l'épaisseur de l'extrémité du levier 2 lors du passage de la gorge à l'intérieur de la fourche. Cet ergot n'ajoute donc rien à l'épaisseur "e" dont il est question. Le jeu (d-e) est de toutes façons inférieur au diamètre du fil 4 de sorte que celui-ci ne puisse pas échapper à la gorge 3 lorsque celle-ci traverse le passage 59. L'un 590 de ces deux éléments plans 590, 591 porte la poulie de renvoie 52. Le passage 59 pour la gorge 3 apparaît entre les éléments plans 590 et 591 et à côté de la poulie 52. Entre la poulie 52 et l'élément 591 formant contre plaque, il subsiste nécessairement une fente 593 pour le passage du levier 2, au niveau de son prolongement.

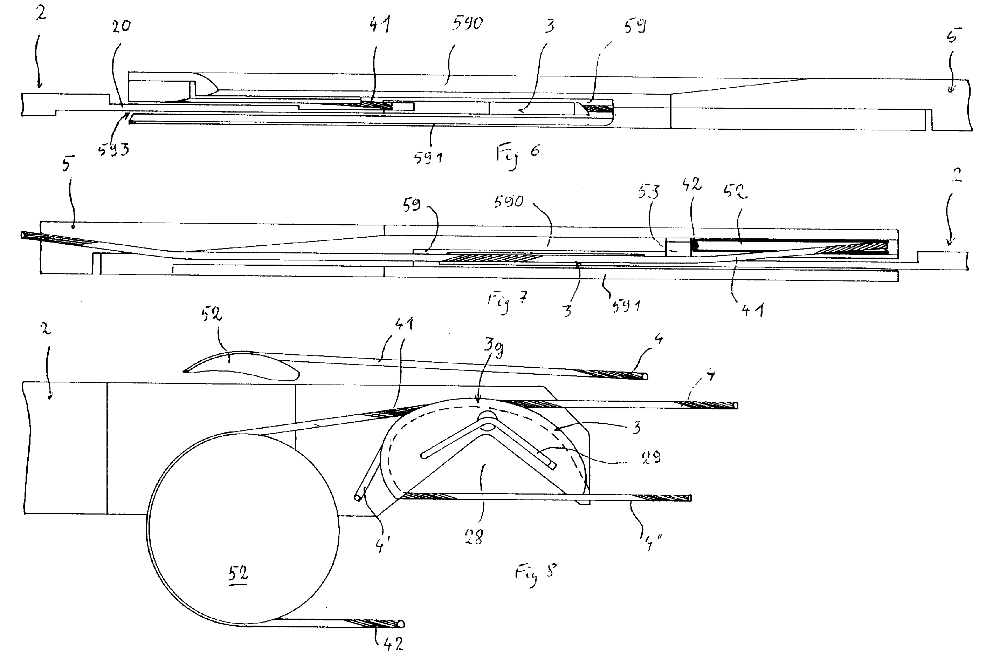

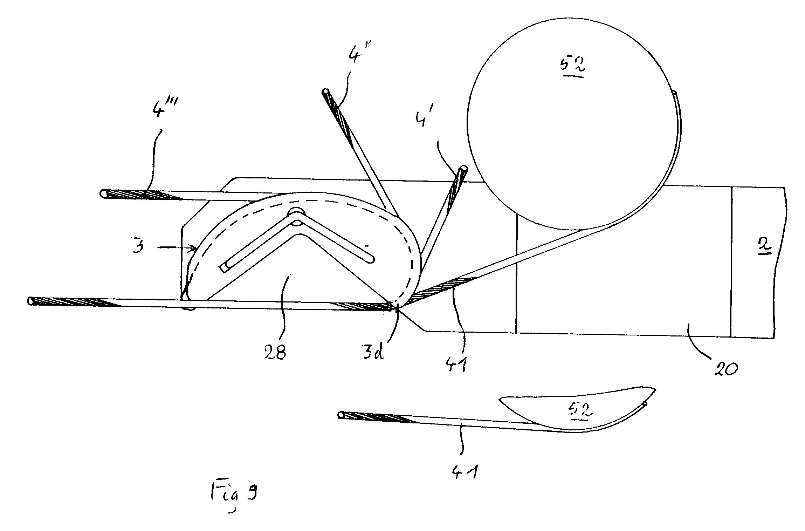

Les moyens de retenues sur chacune des deux couronnes axialement opposées doivent être compatibles avec les moyens de dévidage du bras rotatif 5 qui, lui, est unique. C'est pourquoi les extrémités des leviers 2 de la couronne de gauche (figures 6, 7, 8 et 10) et ceux de la couronne de droite (figure 9) sont symétriques par rapport à un plan η perpendiculaire à l'axe des couronnes (visible sur la figure 10) et comprenant l'axe de rotation 50 du bras rotatif 5. Donc les leviers 2 ne sont pas interchangeables entre les couronnes de gauche et de droite, la position de la gorge 3 par rapport à la tôle constituant le prolongement 20 du levier 2 étant inverse dans un cas par rapport à l'autre. Dès lors, l'accrochage du fil 4 sur une gorge 3 à gauche (là où la présentation du fil 4 a lieu alors que le bras rotatif s'écarte radialement de l'axe des couronnes) débute sur la zone médiane 3g de la gorge 3, alors que de l'autre côté (là où la présentation du fil 4 a lieu alors que le bras rotatif se rapproche radialement de l'axe des couronnes), l'accrochage débute sur la zone terminale 3d de la gorge 3. L'allure de la gorge 3 est cependant identique à gauche et à droite, de même que la présence d'un évidement 28 de chaque côté, ces caractéristiques étant dictées principalement par la suite de l'exécution du procédé de fabrication. Les références 4', 4", 4''' indiquent des positions successives prises par le fil 4 lorsqu'on l'accroche aux gorges 3.

Le rabattement du fil 4 sur et autour d'un noyau 7 amène les bras 2 dans la configuration visible à la figure 10. Jusqu'à ce stade, les lèvres 31 et 32 doivent garantir la retenue du fil 4 sur les gorges 3. On installe une tringle 45 par enfilage de plusieurs tours d'un profilé adéquat comme exposé dans la demande européen précitée, tout en s'appuyant sur le gabarit constitué par les évidements 28 et également sur les lames 8 délimitant le rayon extérieur de la future tringle, ainsi que les doigts 80, fermant, du côté axialement intérieur, l'espace dans lequel la tringle 45 est insérée.

La gorge 3 doit ensuite autoriser le décrochage du fil 4 par le biais de la seule poursuite du mouvement de rapprochement axial des extrémités des leviers 2 vers le noyau 7. A cette fin, la lèvre 32 (c'est-à-dire celle située du côté de la gorge 3 opposé à la fixation de celle-ci sur le levier 2) diminue progressivement de hauteur tout à l'extrémité du levier 2. Ceci est réalisé par un chanfrein 33 bien visible aux figures 2 et 3, ce qui permet le décrochage du fil 4 sans avoir besoin d'un mouvement (dans l'axe du noyau) relatif entre la tringle 45 et les moyens de retenue constitués par les gorges 3.

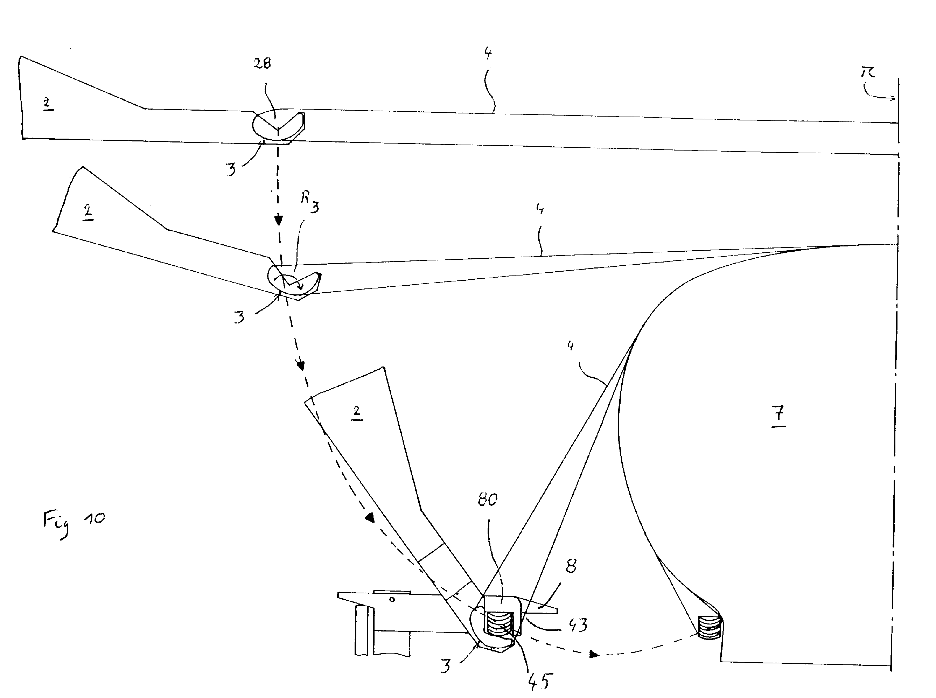

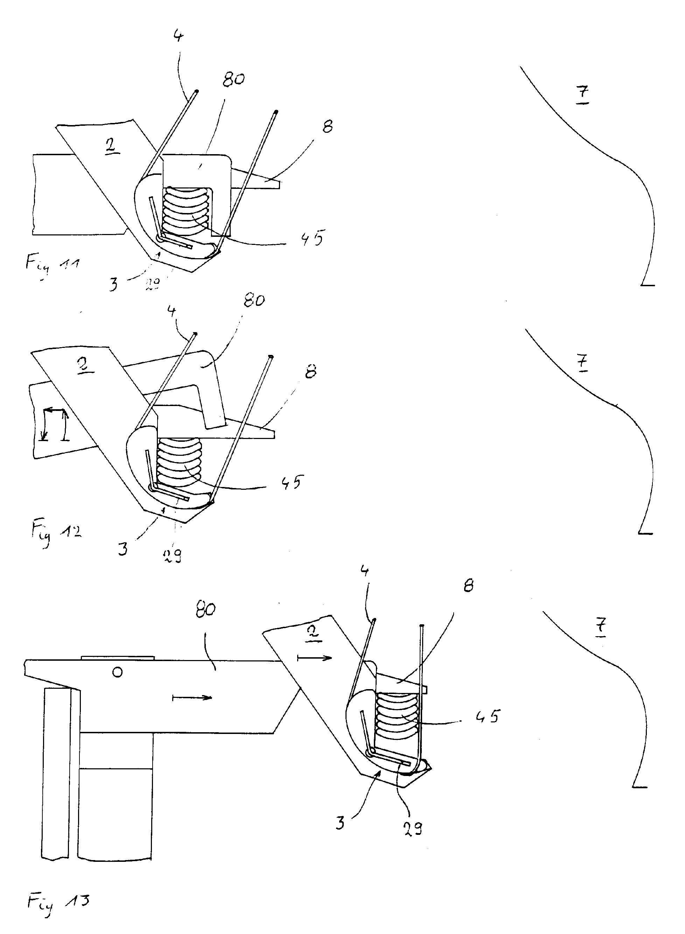

Pour rappel, le mouvement de basculement des leviers 2 résulte de l'action combinée de la commande du déplacement axial de tous les points d'articulation 21, d'un appui sur les points de commande 22, et de la réaction de tension du fil 4. En poursuivant le rapprochement vers le noyau 7, le rapprochement axial de la gorge 3 s'accompagne d'un mouvement radial vers l'axe des couronnes de leviers 2. Il en résulte une rotation R3 de la gorge 3 par rapport à l'orientation des fils 4 (voir figures 10 à 14). Puis le brin 43 du fil 4 s'engage donc sur le chanfrein 33, ce qui pousse le fil 4 à quitter la gorge 3. A ce stade, il est préférable de maintenir la tension dans les brins du fil 4. Or celle-ci ne peut encore résulter de l'appui des fils 4 sur la tringle 45 parce que celle-ci n'est pas encore à sa position finale contre le noyau 7. La longueur des brins de fil 4 est donc surabondante au moment du décrochage du fil 4. On maintient la tension du fil 4 par un ergot 29 qui, en coopération avec l'extrémité du levier 2 adjacent, retient le fil 4. L'intervention de l'ergot 29 apparaît bien à la figure 14.

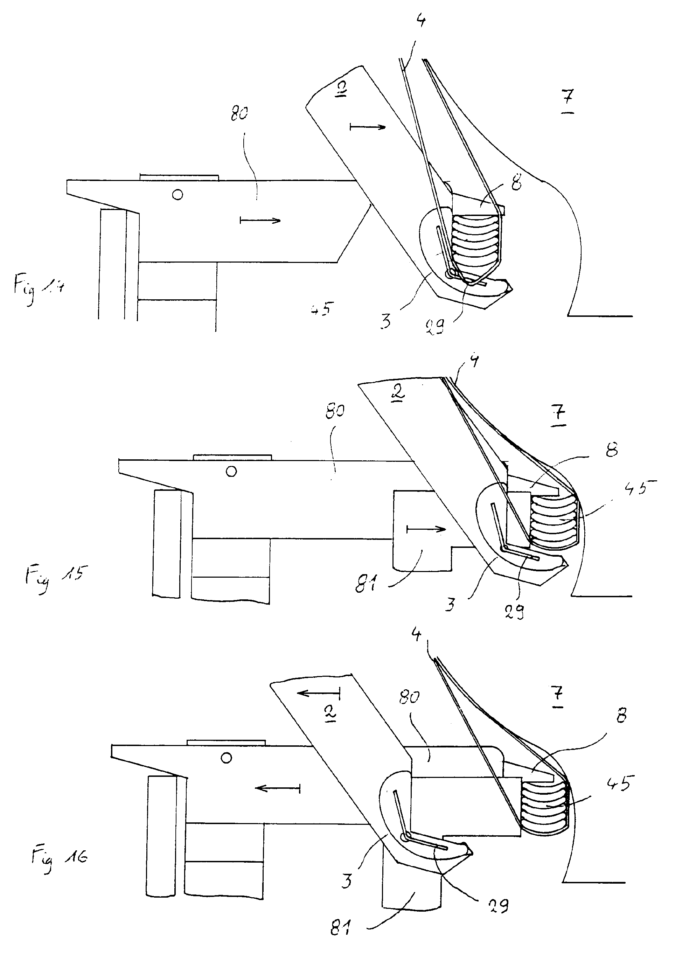

Les tringles 45 sont libérées des leviers 2 et poussées vers le noyau 7 par les brides 81 (figures 15 et 16), grâce à un mouvement axial relatif desdites brides 81 par rapport aux leviers 2. Au préalable et afin de pouvoir appuyer les tringles 45 jusque contre le noyau 7, les doigts 80 sont passés axialement à l'extérieur des tringles 45, comme montré sur la figure 12. Les figures 10 à 16 font bien apparaître tous les mouvements des différents organes, schématisés par les flèches.

Il convient de conférer une certaine souplesse dans le mouvement de basculement des leviers 2. On peut insérer un élément élastique formant ressort 27 entre le corps du levier 2 et le point de commande 22 (figure 1).

Afin de mieux guider l'ancrage du fil 4 sur le caoutchouc revêtant le noyau 7 lors du mouvement de rabattement, on peut régler l'écart entre deux brins adjacents du fil 4 retenus par la même gorge 3 en inclinant l'extrémité de ladite gorge 3 dans le sens périphérique d'une quantité correspondant au maximum à la moitié de l'écart entre deux moyens de retenue adjacents. Sinon les brins de fil 4 quittant la gorge 3 de part et d'autre de celle-ci ont tendance à rester dans le même plan méridien et à se juxtaposer.

Afin de faciliter la compréhension de la description, les figures reprennent les mêmes références que celles utilisées dans la demande européen précitée lorsque l'objet désigné est identique ou du moins a une fonction analogue.

**Revendications**

1. Moyens de retenue d'un fil (4) continu pour un appareil de fabrication de pneumatiques, ledit appareil étant du type comportant deux couronnes coaxiales de leviers (2) dont l'extrémité porte lesdits moyens de retenue, caractérisés en ce que lesdits moyens de retenue sont définis essentiellement par une gorge (3) limitée par deux lèvres (31, 32), le fond (30) de ladite gorge décrivant une courbe non fermée.

2. Moyen de retenue selon la revendication 1, caractérisé en ce que ladite courbe est comprise dans un plan sensiblement radial.

3. Moyen de retenue selon la revendication 2, caractérisé en ce que ladite courbe a l'allure générale d'une spirale.

4. Moyen de retenue selon la revendication 2, caractérisé en ce que ladite courbe a l'allure générale d'un ovale partiel.

5. Moyen de retenue selon l'une des revendications 1 à 4, caractérisé en ce qu'une des lèvres (31) est constituée par le prolongement (20) du levier (2) auquel ladite gorge (3) est fixée.

6. Moyen de retenue selon la revendication 5, caractérisé en ce que son extrémité présente, du côté radialement extérieur, un évidement (28) servant de gabarit pour l'installation d'une tringle (45) d'ancrage du renforcement.

7. Moyen de retenue selon les revendications 4, 5 et 6, caractérisé en ce que ledit évidement (28) est situé à l'intérieur de l'ovale partiel formé par ladite gorge (3), de telle façon que celle-ci contourne ledit gabarit, du côté radialement intérieur.

8. Moyen de retenue selon l'une des revendications 1 à 7, caractérisé en ce que, tout à l'extrémité du levier (2), la lèvre (32) située du côté de la gorge (3) opposé à la fixation de celle-ci sur le levier (2) diminue progressivement de hauteur.

9. Moyen de retenue selon l'une des revendications 1 à 8, caractérisé en ce que tout à l'extrémité du levier (2), la gorge (3) est inclinée dans le sens périphérique d'une quantité correspondant au maximum à la moitié de l'écart entre deux moyens de retenue adjacents.

10. Moyen de retenue selon l'une des revendications 1 à 9, caractérisé en ce que ledit levier (2) comporte un élément élastique (27) formant ressort.

11. Ensemble constitué par des moyens de retenue (3) d'un fil (4) et un moyen de présentation du fil pour un appareil de fabrication de pneumatiques, ledit appareil étant du type comportant deux couronnes coaxiales de leviers (2) dont l'extrémité porte des moyens de retenue (3) selon l'une des revendications 1 à 10, caractérisé en ce que les moyens de présentation ont l'allure d'une fourche constituée par deux éléments plans (590, 591), parallèles au mouvement desdits moyens de présentation, séparés entre eux de l'épaisseur des moyens de retenue plus un jeu, le fil (4) étant amené et dévidé par l'un des deux éléments plans (590).

12. Ensemble selon le revendication 11, caractérisé en ce que ledit élément plan (590) par lequel le fil (4) est amené comporte une poulie de renvoi (52) du fil, située dans l'épaisseur de celui-ci.

## Patentansprüche

1. Halteeinrichtungen eines kontinuierlichen Fadens (4) für ein Herstellungsgerät von Luftreifen, wobei das Gerät vom Typ ist mit zwei koaxialen Kränzen von Hebeln (2), deren Ende die Rückhalteeinrichtungen trägt, **dadurch gekennzeichnet, daß die** Rückhalteeinrichtungen im wesentlichen definiert sind durch einen von zwei Lippen (31,32) begrenzten Einschnitt (3), wobei der Boden (30) des Einschnitts eine nicht geschlossene Kurve beschreibt.

2. Rückhalteeinrichtung nach Anspruch 1, **dadurch gekennzeichnet, daß** die Kurve in einer im wesentlichen radialen Ebene enthalten ist.

3. Rückhalteeinrichtung nach Anspruch 2, **dadurch gekennzeichnet, daß** die Kurve die allgemeine Ansicht einer Spirale aufweist.

4. Rückhalteeinrichtung nach Anspruch 2, **dadurch gekennzeichnet, daß** die Kurve die allgemeine Ansicht eines Teilovals aufweist.

5. Rückhalteeinrichtung nach einem der Ansprüche 1 bis 4, **dadurch gekennzeichnet, daß** eine der Lippen (31) durch die Verlängerung (20) des Hebels (2) gebildet wird, an dem der Eischnitt (3) befestigt ist.

6. Rückhalteeinrichtung nach Anspruch 5, **dadurch gekennzeichnet**, daß sein Ende auf der radialen äußeren Seite eine Ausnehmung (28) aufweist, die als Schablone für die Anordnung einer Verstärkungsankerungsstange (45) dient.

7. Rückhalteeinrichtung nach Anspruch 4, 5 und 6, **dadurch gekennzeichnet,** daß die Ausnehmung (28) im Inneren des Teilovals angeordnet ist, gebildet durch den Einschnitt (3), derart, daß dieser die Schablone auf der radialen Innenseite umgibt.

8. Rückhalteeinrichtung nach einem der Ansprüche 1 bis 7, **dadurch gekennzeichnet**, daß ganz am Ende des Hebels (2) die Lippe (32), die auf der Seite des Einschnitts (3) angeordnet ist, gegenüberliegend der Befestigung von dieser an dem Hebel (2) fortschreitend die Höhe verringert.

9. Rückhalteeinrichtung nach einem der Ansprüche 1 bis 8, **dadurch gekennzeichnet, daß** ganz am Ende des Hebels (2) der Einschnitt (3) in Umfangsrichtung um einen Betrag geneigt ist, der dem Maximum der Hälfte der Beabstandung zwischen zwei benachbarten Rückhalteeinrichtungen entspricht.

10. Rückhalteeinrichtung nach einem der Ansprüche 1 bis 9, **dadurch gekennzeichnet, daß** der Hebel (2) ein elastisches, eine Feder bildendes Element (27) aufweist.

11. Anordnung, gebildet aus Rückhalteeinrichtungen (3) eines Fadens (4) und einer Präsentiereinrichtung des Fadens für ein Gerät zur Herstellung von Luftreifen, wobei das Gerät vom Typ ist mit zwei koaxialen Kränzen von Hebeln (2), deren Ende Rückhalteeinrichtungen (3) gemäß einem der Ansprüche 1 bis 10 aufweist, **dadurch gekennzeichnet, daß die** Präsentiereinrichtungen wie eine Gabel aussehen, gebildet durch zwei ebene Elemente (590, 591), parallel zur Bewegung der genannten Präsentiereinrichtungen, getrennt untereinander von der Dicke der Rückhalteeinrichtungen plus einem Spiel, wobei der Faden (4) mitgenommen und abgewickelt wird durch eines der beiden ebenen Elemente (590).

12. Anordnung nach Anspruch 11, **dadurch gekennzeichnet,** daß das ebene Element (590), durch den der Faden (4) mitgenommen wird, eine Leitwalze (52) des Fadens aufweist, die in seiner Dicke angeordnet ist.

## Claims

1. A cord retention means (4) for a tyre manufacturing apparatus, said apparatus being of the type having two coaxial rings of levers (2), the ends of which bear the said retention means, said retention means comprising a groove (3) defined between two lips (31, 32) the bottom (30 of said groove forming an unclosed curve.

2. A retention means according to claim 1, characterized by the fact that said curve is contained within a plane substantially radial to the axis of the ring.

3. A retention means according to claim 2, characterized by the fact that the said curve has the general shape of a spiral.

4. A retention means according to claim 2, characterized by the fact that the said curve has the general shape of a partial oval.

5. A retention means according to one of the claims 1 to 4, characterized by the fact that one of the lips (31) is formed by the extension (20) of the lever (2) to which said groove (3) is fastened.

6. A retention means according to claim 5, characterized by the fact that its end has, on the radially outer side, a recess (28) serving as a template for the installation of a bead wire (45) for the anchoring of the reinforcement.

7. A retention means according to claims 4, 5 and 6, characterized by the fact that the curve formed by said groove (3) has the general shape of a partial oval and said recess (28) is located within the partial oval formed by said groove (3) in such a manner that the latter surrounds said template on the radially inner side.

8. A retention means according to one of the claims 1 to 7, characterized by the fact that at the very end of the lever (2), the lip (32) located on the side of the groove (3) opposite the fastening thereof on the lever (2) progressively decreases in height.

9. A retention means according to one of the claims 1 to 8, characterized by the fact that at the very end of the lever (2), the groove (3) is inclined in the peripheral direction by an amount corresponding to at most one half of the distance between two adjacent retention means.

10. A retention means according to one of the claims 1 to 9, characterized by the fact that said lever (2) has a spring forming elastic element (27).

11. An assembly formed by retention means of the cord (4) and a cord presentation means for a tyre manufacturing apparatus, said apparatus being of the type having two coaxial rings of levers (2), the ends of which bear a retention means (3) according to one of the claims 1 to 10, characterized by the fact that the presentation means has the shape of a fork formed by two flat elements (590, 591) which are parallel to the movement of said presentation means, separated from each other by the thickness of the retention means plus a slight clearance, the cord (4) being fed and unwound by one of the two flat elements (590).

12. An assembly according to claim 11, characterized by the fact that said flat element (590) by which the cord (4) is fed comprises a return pulley (52) for the cord.

Fig 1

EP 0 331 955 B1

Fig 2

Fig 3

8

Fig 5

Fig 4

EP 0 331 955 B1

Fig 6

Fig 7

Fig 8

EP 0 331 955 B1

EP 0 331 955 B1

Fig 9

Fig 10

Fig 11

Fig 12

Fig 13

Fig 14

Fig 15

Fig 16